Europäisches Patentamt

European Patent Office

Office européen des brevets

(11) Publication number: **0 125 718**
**B1**

# EUROPEAN PATENT SPECIFICATION

(45) Date of publication of patent specification: **01.04.87**

(51) Int. Cl.⁴: **F 16 C 35/07**

(21) Application number: **84200617.3**

(22) Date of filing: **02.05.84**

(54) Method of executing an assembly in such manner that fretting corrosion will not occur.

(30) Priority: **13.05.83 NL 8301723**

(43) Date of publication of application:
**21.11.84 Bulletin 84/47**

(45) Publication of the grant of the patent:
**01.04.87 Bulletin 87/14**

(84) Designated Contracting States:
**CH DE FR GB IT LI NL SE**

(56) References cited:
**FR-A-1 244 438**
**FR-A-2 065 887**
**FR-A-2 160 140**
**FR-A-2 257 041**
**FR-A-2 273 974**
**GB-A- 760 145**
**GB-A-1 573 913**
**US-A-3 533 667**

(73) Proprietor: **SKF Industrial Trading &
Development Company B.V.
Kelvinbaan 16 P.O. Box 50
NL-3430 AB Nieuwegein (NL)**

(72) Inventor: **van Amerongen, Evert
Albert Schweitzerlaan 1
Bennekom (NL)**

(74) Representative: **Merkelbach, B.
SKF Engineering & Research Centre B.V.
Kelvinbaan 16 P.O. Box 50
NL-3430 AB Nieuwegein (NL)**

Courier Press, Leamington Spa, England.

## Description

The invention relates to a method of executing an assembly of at least two metal parts in fitting contact with each other and capable of minimal movements relative to each other under an alternating load, in particular a rolling bearing assembly, in such manner that fretting corrosion will not occur at the opposing surfaces of the parts, a layer of homogeneous elastic material being applied to one of the opposing surfaces and contacting the other opposing surface.

Fretting corrosion is defined as a phenomenon of wear that occurs between two surfaces subjected to a relative vibratory motion of comparatively small amplitude. In a rolling bearing assembly, such motions occur between the inner ring and the shaft and between the outer ring and the housing because of the alternating stresses in the races as the rolling elements pass along them, with resulting elastic deformations in the said rings.

Heretofore, to avoid fretting corrosion, close press fits have been employed in order to reduce elastic deformations. In the first place, this cannot completely prevent the occurrence of fretting corrosion under high dynamic stresses in a rolling bearing assembly, and in the second place a press fit is not always available; for example when installing a rolling bearing in the axle box or housing of a bearing in railroad rolling stock, or in a doubly supported shaft where one loose bearing is used to compensate play in the shaft, a press fit would present formidable problems.

According to DE—A—2336947, a method is proposed to protect a metal part against corrosion, and in particular to avoid fretting corrosion, wherein, on at least a portion of the surface of the metal part, a layer of material is applied, connected to said part by friction and generating a positive contact potential.

Here, in other words, some relative motion between metal surface and the layer of material must be permitted, so that friction will generate a positive surface charge on the layer of material and a negative surface charge on the metal part, which negative potential prevents occurrence of reactions of anions with the metal. In essence, therefore, fretting corrosion is not combatted, but rather a chemical corrosion, as the consequence of an aqueous electrolyte film present in the fit, and formed for example by condensation.

That layer of material consists preferably of a glass fiber mat imbedded in a synthetic material, so that the known layer does not consist of a homogeneous elastic material: furthermore, because the glass fibres project through the surface, the surface of that layer is not prefectly dense and smooth.

Another approach to reducing fretting corrosion is shown in US—A—3533667 in which a layer of polytetrafluorethylene is bonded to one of the opposing surfaces of two metal parts. The purpose of the layer is to reduce the friction between the parts and hence reduce corrosion.

It is also known from e.g. GB—A—760145 to provide a polymer layer between two metal parts in order to improve the fit under special circumstances, e.g. temperature variation. The surface of the layer is not however determined so as to influence fretting corrosion.

The object of the invention is to improve the method outlined in the preamble, in such manner that in the resulting assembly, no fretting corrosion will occur even under extremely high dynamic stresses, and no press fit is required.

This object is accomplished, in the method according to the invention, in that the free surface of the said layer is made more or less perfectly dense and smooth so that it comes into complete intimate contact with the other opposing surface, with so high a coefficient of friction that no relative sliding oscillatory movements between these two surfaces can take place.

Preferably, the layer consists of a synthetic material sintered to the said surface, a highly satisfactory synthetic material being polyamide 11. It is noted that a very good density is achieved by sintering.

In this way, the elastic deformations set up in the ring by the dynamic loads in the assembly are absorbed by the layer of homogeneous elastic material, so that no relative sliding oscillatory movements can occur. It is here of especially great importance that the surface of the layer be almost perfectly dense and smooth, since otherwise relative sliding motion could nevertheless occur between said surface and the metal surface in contact with it, resulting in fretting corrosion, as will be more fully explained with reference to the drawing. It is noted that the required dense and smooth surface can be obtained by means of fine grinding operations.

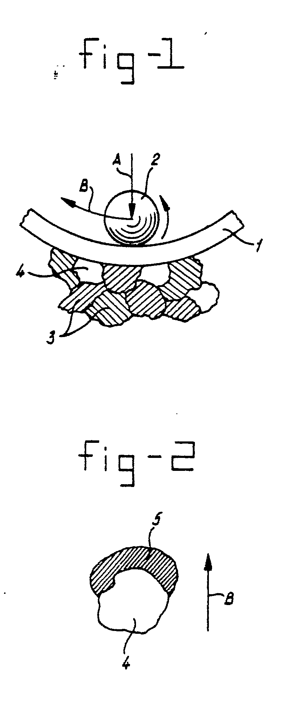

Fig. 1 shows a portion of an outer ring 1 and only one rolling element 2 of a rolling bearing, while between this outer ring and a housing not shown, there is a layer 3 of a homogeneous elastic material of granular structure, in which, however, granules are missing in the surface of this layer of material, leaving open cavities 4. Owing to the rolling bearing load indicated by the arrow A and the rolling elements travelling in direction B, alternating stresses on the ring 1 arise, so that this ring suffers elastic deformations which, at the edges of the open cavities, give rise to relative sliding movements, so that fretting corrosion occurs, and especially so at that edge of a cavity 4 which, in direction B, represents the leading edge, as indicated by the portion 5 in fig. 2, showing a top view of the surface of layer 4 in contact with ring 1.

## Claims

1. Method of constructing an assembly of at least two metal parts in fitting contact with each other and capable of minimal movements relative to each other under an alternating load, in particular a rolling bearing assembly, so that no fretting corrosion will occur at the opposing surfaces of the parts, a layer of homogeneous elastic material being applied to one of the opposing surfaces in fixed connection therewith and contacting the other opposing surface, characterized in that the free surface of the said layer is made almost perfectly dense and smooth, so that it comes into complete intimate contact with the other opposing surface, with so high a coefficient of friction that no relative sliding oscillatory motion can take place between the free surface of said layer and said other opposing surface.

2. Method according to claim 1, characterized in that the layer consists of a synthetic material sintered to the said surface.

3. Method according to claim 2, characterized in that the synthetic material consists of polyamide 11.

**Patentansprüche**

1. Verfahren zum Ausbilden einer Verbindung, insbesondere bei einer Wälzlageranordnung, mit mindestens zwei metallischen Teilen, die angepaßt aneinander anliegen und unter einer wechselnden Last kleinste Relativbewegungen gegeneinander ausführen können, wobei eine Schicht eines homogenen, elastischen Materials auf einer der sich gegenüberstehenden Oberflächen fest aufgebracht ist und die andere der sich gegenüberstehenden Oberflächen berührt, um das Auftreten von Reibkorrosion an diesen Oberflächen zu verhindern, dadurch gekennzeichnet, daß die freie Oberfläche der Schicht nahezu vollständig glatt und dicht hergestellt ist, um so in einen ganz engen Kontakt mit der anderen der sich gegenüberstehenden Oberflächen zu kommen, und einen so hohen Reibbeiwert besitzt, daß zwischen der freien Oberfläche dieser Schicht und der anderen der sich gegenüberstehenden Oberflächen keine oszillierenden Relativgleitbewegungen entstehen können.

2. Verfahren nach Anspruch 1, dadurch gekennzeichnet, daß die Schicht aus einem auf dieser Oberfläche aufgesinterten synthetischen Material besteht.

3. Verfahren nach Anspruch 2, dadurch gekennzeichnet, daß das synthetische Material aus Polyamid 11 besteht.

**Revendications**

1. Procédé pour effectuer un assemblage d'au moins deux pièces métalliques en contact ajusté entre elles et capables d'effectuer des mouvements minimaux l'une par rapport à l'autre sous l'action d'une charge alternante, en particulier un assemblage de palier à roulement, de façon qu'il ne se produise pas de corrosion de contact sur les surfaces opposées l'une à l'autre des pièces, une couche de matière élastique homogène étant appliquée sur une des surfaces opposées, en étant fixée à cette surface, et en contact avec l'autre surface opposée, caractérisé en ce que la surface libre de la couche est rendue presque parfaitement dense et lisse, de façon à permettre un contact intime total avec l'autre surface opposée, avec un coefficient de friction tellement élevé qu'un mouvement oscillatoire glissant relatif ne puisse se produire entre la surface libre de la couche et l'autre surface opposée.

2. Procédé selon la revendication 1, caractérisé en ce que la couche est constituée par une matière synthétique frittée sur ladite surface.

3. Procédé selon la revendication 2, caractérisé en ce que la matière synthétique est du polyamide 11.

fig-1

fig-2